# EUROPEAN PATENT SPECIFICATION

(11) **EP 4 371 728 B1**
(45) Date of publication and mention of the grant of the patent: **13.08.2025**
(21) Application number: 22841895.0
(22) Date of filing: 22.06.2022
(51) Int. Cl.: B29C 45/06, B29C 45/83, B29C 45/17

(54) **MOLD CLAMPING DEVICE AND INJECTION MOLDING MACHINE**
FORMSCHLIESSVORRICHTUNG UND SPRITZGIESSMASCHINE
DISPOSITIF DE SERRAGE ET MACHINE DE MOULAGE PAR INJECTION

(30) Priority: 16.07.2021 JP 2021117595
(43) Date of publication of application: 22.05.2024
(73) Proprietor: The Japan Steel Works, Ltd., Tokyo 141-0032 (JP)
(72) Inventor: MITANI, Souma, Tokyo 141-0032 (JP)
(74) Representative: Grünecker Patent- und Rechtsanwälte PartG mbB
(86) International application number: PCT/JP2022/024975
(87) International publication number: WO 2023/286551

(56) References cited:
- EP-A1- 3 827 961
- JP-A- 2007 021 766
- JP-A- 2020 028 975
- JP-A- 2021 049 664
- US-A1- 2017 182 690

## Description

### TECHNICAL FIELD

The present invention relates to a mold clamping device including a rotary platen, and an injection molding machine.

### BACKGROUND ART

A mold clamping device provided in an injection molding machine includes a fixed platen and a movable platen that opens and closes a mold with respect to the fixed platen, see for example document EP 3 827 961 A1 or JP 2009-045939 A. In an injection molding machine including a rotary platen for rotating a mold, the rotary platen is provided on a mold platen of a fixed platen and a movable platen, and as described in Patent Literature 1, for example, the rotary platen is often provided on the movable platen. The rotary platen is provided to face the movable platen so as to rotate. Then, a plurality of molds, that is, rotary-side molds are attached. When the molds are clamped, one of the plurality of rotary-side molds is clamped with a fixed-side mold attached to the fixed platen. When a rotation position of the rotary platen is changed and the molds are clamped, another rotary-side mold is clamped with the fixed-side mold.

### SUMMARY OF INVENTION

### TECHNICAL PROBLEM

The mold platen is provided with a metal plate-form member, that is, a wear plate provided with a solid lubricant. This is to reduce friction when the rotary platen rotates relative to the mold platen in a slidable manner. This is because, although there is a type of rotary platen that rotates in a non-contact manner with a slight gap between the rotary platen and the mold platen without sliding against the mold platen, even such a rotary platen is required to be prepared for a case of sliding in contact with the mold platen.

When the rotary platen rotates, a relative speed between each part of the wear plate and the rotary platen is proportional to a distance from a rotation center. The relative speed is greatest at a position farthest from the rotation center. In this case, a sliding speed of the wear plate is maximized at the position farthest from the rotation center. The wear plate has an allowable sliding speed, and cannot be slid beyond this speed. In order to increase production efficiency, it is desirable to shorten a molding cycle by increasing a rotation speed of the rotary platen, but there is a problem in that it is difficult to increase the speed due to a restriction on the allowable sliding speed of the wear plate.

In view of the above problems, an object of the present disclosure is to provide a rotary platen that can be rotated at a high speed.

Other problems and novel features will become apparent from description of the present description and the accompanying drawings.

### SOLUTION TO PROBLEM

The present inventors have found that the above problems can be solved by adopting the configuration as defined in claim 1.

### ADVANTAGEOUS EFFECTS OF INVENTION

According to the present disclosure, it is possible to provide a rotary platen that can be rotated at a high speed, a mold clamping device including the rotary platen, and an injection molding machine.

### BRIEF DESCRIPTION OF DRAWINGS

[FIG. 1] FIG. 1 is a side view of an injection molding machine according to the present illustrative embodiment.
[FIG. 2] FIG. 2 is a front view showing a rotary platen and a part of a mold clamping device according to the present illustrative embodiment.
[FIG. 3] FIG. 3 is a front view of a movable platen according to the present illustrative embodiment.
[FIG. 4] FIG. 4 is a front view of the rotary platen according to the present illustrative embodiment.
[FIG. 5] FIG. 5 is a side sectional view showing the movable platen and the rotary platen according to the present illustrative embodiment.
[FIG. 6] FIG. 6 is a perspective view showing a cross roller ring provided on the rotary platen according to the present illustrative embodiment in a partial cross section.
[FIG. 7A] FIG. 7A is a front view of a plate-form member provided on the movable platen and a pressure receiving surface formed on the rotary platen according to the present illustrative embodiment, projected from a direction perpendicular to the rotary platen.
[FIG. 7B] FIG. 7B is a front view of the plate-form member provided on the movable platen and the pressure receiving surface formed on the rotary platen according to the present illustrative embodiment, projected from the direction perpendicular to the rotary platen.
[FIG. 7C] FIG. 7C is a front view of the plate-form member provided on the movable platen and the pressure receiving surface formed on the rotary platen according to the present illustrative embodiment, projected from the direction perpendicular to the rotary platen.
[FIG. 7D] FIG. 7D is a front view of the plate-form member provided on the movable platen and the pressure receiving surface formed on the rotary platen according to the present illustrative embodiment, projected from the direction perpendicular to the rotary platen.
[FIG. 7E] FIG. 7E is a front view of the plate-form member provided on the movable platen and the pressure receiving surface formed on the rotary platen according to the present illustrative embodiment, projected from the direction perpendicular to the rotary platen.
[FIG. 8] FIG. 8 is a graph showing changes in an angular speed of the rotary platen and changes in the maximum sliding speed at an overlapping portion between the plate-form member provided on the movable platen and the pressure receiving surface formed on the rotary platen when the rotary platen according to the present illustrative embodiment is rotated.
[FIG. 9A] FIG. 9A is a front view showing a plate-form member according to a second illustrative embodiment of the present invention.
[FIG. 9B] FIG. 9B is a front view showing a plate-form member according to a third illustrative embodiment of the present invention.
[FIG. 9C] FIG. 9C is a front view showing a plate-form member according to a fourth illustrative embodiment of the present invention.
[FIG. 10] FIG. 10 is a front view showing a plate-form member according to a fifth illustrative embodiment of the present invention.
[FIG. 11A] FIG. 11A is a front view showing a plate-form member according to a sixth illustrative embodiment of the present invention.
[FIG. 11B] FIG. 11B is a front view showing a plate-form member according to a seventh illustrative embodiment of the present invention.

### DESCRIPTION OF EMBODIMENTS

Hereinafter, specific illustrative embodiments will be described in detail with reference to the drawings. However, the present invention is not limited to the following illustrative embodiments. In order to clarify the description, the following description and the drawings are simplified as appropriate. In the drawings, the same elements are denoted by the same reference numerals, and repeated description thereof is omitted as necessary. In addition, hatching may be omitted to avoid complicating the drawings.

The present illustrative embodiment will be described.

A rotary platen according to an illustrative embodiment of present invention is a rotary platen that is disposed to face a mold platen, the rotary platen being provided to be rotatable with respect to the mold platen, and a mold being attachable to the rotary platen,
in which a plate-form member is attached to a surface of the rotary platen that faces the mold platen, and
in which a contour shape of the plate-form member is non-circular.

A mold clamping device according to an illustrative embodiment of the present invention includes:
a fixed platen, a mold being attachable to the fixed platen;
a movable platen configured to open and close molds with respect to the fixed platen; and
a rotary platen disposed to face the movable platen, the rotary platen being provided to be rotatable with respect to the movable platen, and a mold being attachable to the rotary platen,
in which a plate-form member is provided on a surface of one platen of the movable platen and the rotary platen facing the other platen, and
in which a contour shape of the plate-form member is non-circular.

An injection molding machine according to an illustrative embodiment of the present invention includes:
a mold clamping device configured to clamp a mold; and
an injection device configured to inject an injection material,
in which the mold clamping device includes:
   a fixed platen, a mold being attachable to the fixed platen;
   a movable platen configured to open and close molds with respect to the fixed platen; and
   a rotary platen disposed to face the movable platen, the rotary platen being provided to be rotatable with respect to the movable platen, and a mold being attachable to the rotary platen,
in which a plate-form member is provided on a surface of one platen of the movable platen and the rotary platen facing the other platen, and
in which a contour shape of the plate-form member is non-circular.

### <Injection Molding Machine>

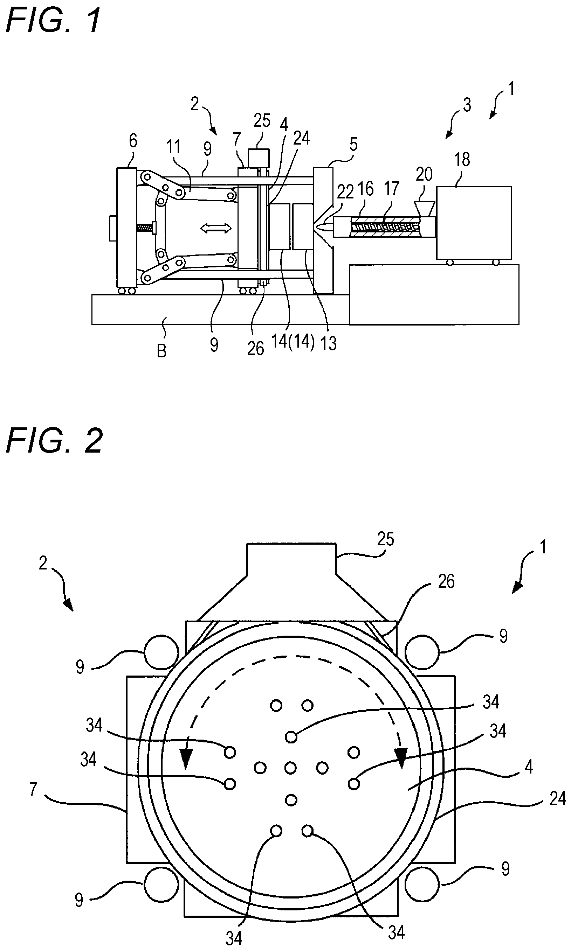

As shown in FIG. 1, an injection molding machine 1 according to the present illustrative embodiment includes a mold clamping device 2 for clamping a mold, an injection device 3 for melting and injecting an injection material, and a rotary platen 4 provided on the mold clamping device 2.

### <Mold Clamping Device>

The mold clamping device 2 includes a fixed platen 5 fixed on a bed B, a mold clamping housing 6 that slides on the bed B, and a movable platen 7 that also slides on the bed B. The fixed platen 5 and the mold clamping housing 6 are coupled by a plurality of, for example, four tie bars 9, 9 ... The movable platen 7 is slidable between the fixed platen 5 and the mold clamping housing 6. A mold clamping mechanism 11 is provided between the mold clamping housing 6 and the movable platen 7. The mold clamping mechanism 11 may be implemented by a direct pressure type mold clamping mechanism, that is, a mold clamping cylinder. In the present illustrative embodiment, the mold clamping mechanism 11 is implemented by a toggle mechanism.

As will be described in detail later, the rotary platen 4 according to the present illustrative embodiment is provided on the movable platen 7. The fixed platen 5 is provided with a fixed-side mold 13. The rotary platen 4 is provided with two rotary-side molds 14, 14. In FIG. 1, the two rotary-side molds 14, 14 attached to the rotary platen 4 are provided on a front side and a back side of the paper surface, and are shown in an overlapping manner. One of the two rotary-side molds 14, 14 is aligned with the fixed-side mold 13 according to a rotation position of the rotary platen 4. When the mold clamping mechanism 11 is driven, the fixed-side mold 13 and one rotary-side mold 14 aligned therewith are opened and closed.

### <Injection Device>

The injection device 3 includes a heating cylinder 16, a screw 17 inserted in the heating cylinder 16, and a screw driving device 18 configured to drive the screw 17. A hopper 20 is provided in the vicinity of a rear end portion of the heating cylinder 16. An injection nozzle 22 is provided at a tip end of the heating cylinder 16.

### <Rotary Platen>

The rotary platen 4 is provided on the movable platen 7 as described above. FIG. 2 shows the rotary platen 4 and the movable platen 7 when viewed from a direction perpendicular to the rotary platen 4. The rotary platen 4 rotates smoothly with respect to the movable platen 7. A rotary platen driving mechanism 25 is provided above the movable platen 7. A pulley 24 having a diameter slightly larger than that of the rotary platen 4 is fixed to the rotary platen 4. As shown in FIGS. 1 and 2, a belt 26 is wound around the pulley 24 and the rotary platen driving mechanism 25. When the rotary platen driving mechanism 25 is driven, the pulley 24 and the rotary platen 4 rotate integrally.

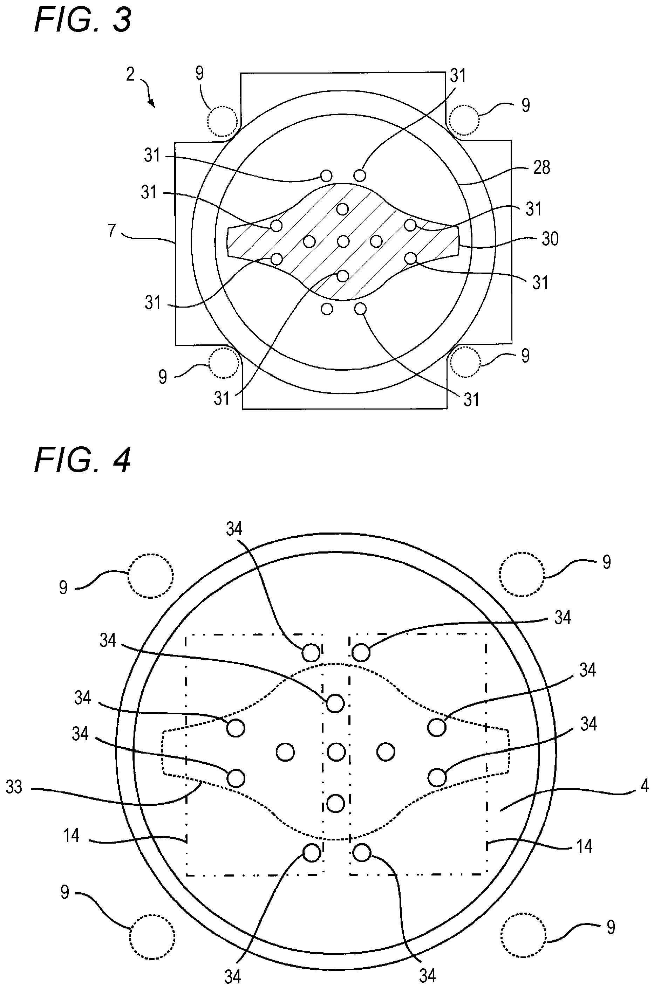

FIG. 3 shows the movable platen 7 with the rotary platen 4 (see FIGS. 1 and 2) removed. Four corners of the movable platen 7 are cut out to allow the tie bars 9, 9 ... to pass through. A circular table portion 28 having a large diameter is formed on a surface of the movable platen 7 on which the rotary platen 4 (see FIGS. 1 and 2) is placed, that is, on a facing surface. The circular table portion 28 is provided with a plate-form member for friction reduction, that is, a wear plate 30 provided with a solid lubricant. In the present illustrative embodiment, the wear plate 30 is characterized by an upper surface shape thereof, that is, a contour shape, which will be explained in detail later. The movable platen 7 and the wear plate 30 have a plurality of ejector rod holes 31, 31, ... for protruding ejector rods.

In the illustrative embodiment of the present invention, of the movable platen and the rotary platen, the other platen on which the plate-form member is not provided has a base portion on a surface facing the one platen on which the plate-form member is provided. An upper surface of the base portion serves as a pressure receiving surface that comes into close contact with the plate-form member and receives a mold clamping force during mold clamping. It is preferable that a contour shape of the base portion is non-circular.

FIG. 4 shows the rotary platen 4 viewed from a mounting surface of the rotary-side molds 14 and 14. The rotary-side molds 14 and 14 are indicated by two-dot chain lines. On a back surface side of the rotary platen 4, that is, on a facing surface facing the movable platen 7 (see FIG. 3), a base portion 33 slightly rising from the facing surface is formed. The base portion 33 is indicated by a dotted line. An upper surface of the base portion 33 serves as the pressure receiving surface that comes into close contact with the wear plate 30 (see FIG. 3) and receives a mold clamping force during mold clamping. Similar to the wear plate 30, the base portion 33 is also characterized by a contour shape, which will be explained in detail later. The rotary platen 4 also has a plurality of ejector rod holes 34, 34, ... for protruding the ejector rods.

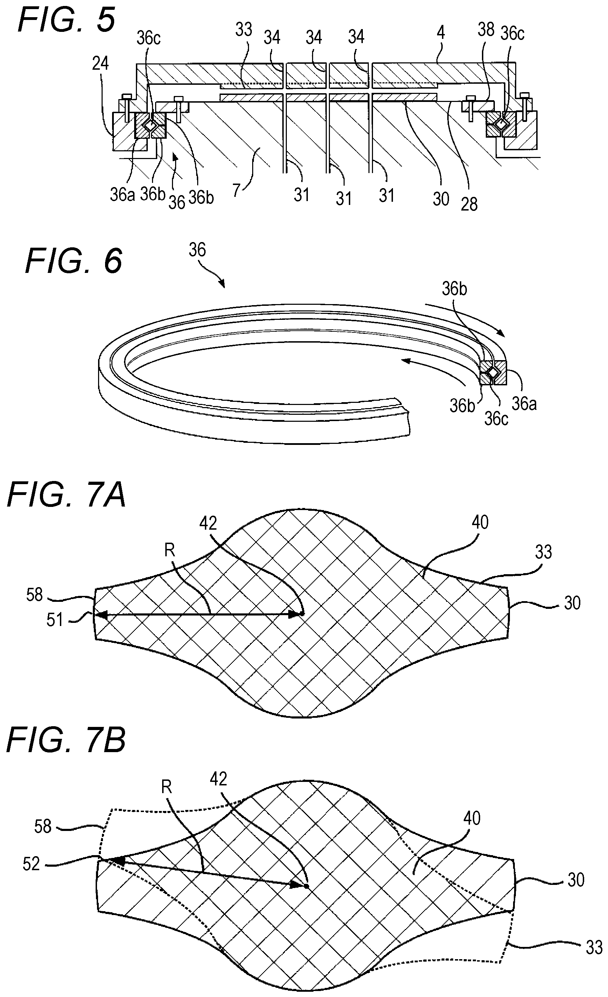

FIG. 5 is a sectional view of the movable platen 7 and the rotary platen 4 viewed from the side. The movable platen 7 and the rotary platen 4 are connected via a cross roller ring 36 which is a bearing component having a special shape. As shown in FIG. 6, the cross roller ring 36 has a ring shape as a whole. The cross roller ring 36 includes an outer ring 36a, a pair of inner rings 36b, 36b, and a large number of rollers 36c, 36c, ... interposed therebetween. The rollers 36c, 36c, ... have a cylindrical shape and roll between the outer ring 36a and the pair of inner rings 36b, 36b. Therefore, in the cross roller ring 36, the pair of inner rings 36b, 36b rotate smoothly relative to the outer ring 36a.

As shown in FIG. 5, the pair of inner rings 36b, 36b of the cross roller ring 36 are fixed to the circular table portion 28 of the movable platen 7 by a pressing member 38. The rotary platen 4 and the pulley 24 are fixed to the outer ring 36a of the cross roller ring 36. That is, the rotary platen 4 is provided on the movable platen 7 via the cross roller ring 36. As a result, the rotary platen 4 smoothly rotates relative to the movable platen 7.

In the present illustrative embodiment, a gap is formed between the wear plate 30 provided on the movable platen 7 and the base portion 33 formed on the rotary platen 4. That is, when the rotary platen 4 according to the present illustrative embodiment rotates, the wear plate 30 and the base portion 33 hardly come into contact with each other. That is, sliding hardly occurs. Although the gap is shown in an emphasized manner in FIG. 5, the gap is actually small. Therefore, the base portion 33 and the wear plate 30 are brought into close contact with each other by a mold clamping force during mold clamping, and the mold clamping force is received by the movable platen 7. When the rotation position of the rotary platen 4 is at a position where the mold can be clamped, the ejector rod holes 31, 31, ... of the movable platen 7 and the ejector rod holes 34, 34, ... of the rotary platen 4 are aligned.

### <Wear Plate and Base Portion>

In the illustrative embodiment of the present invention, the plate-form member is preferably formed of a material having a hardness lower than that of the base portion. The plate-form member is preferably made of a metal plate with a solid lubricant.

The wear plate 30 (see FIG. 3) provided on the movable platen 7 is made of an alloy having a hardness lower than that of a metal forming the rotary platen 4. In the wear plate 30, a solid lubricant mainly composed of graphite is uniformly dispersed. The wear plate 30 is formed by sintering. The wear plate 30 in the present illustrative embodiment is characterized in that the contour shape is non-circular as shown in FIG. 3. Specifically, the wear plate 30 has a circular shape with a small diameter at the center and a flat shape extending in a radial direction at both ends. The contour shape of the base portion 33 (see FIG. 4) formed on the rotary platen 4 also substantially matches the contour shape of the wear plate 30. That is, the base portion 33 has a flat shape.

In the illustrative embodiment of the present invention, it is preferable that each of the plurality of molds attached to the rotary platen is at least partially overlapped with the plate-form member when viewed from a direction perpendicular to the rotary platen.

As described above, at the time of mold clamping, the wear plate 30 and the base portion 33 come into contact with each other. Accordingly, the mold clamping force is received by the movable platen 7. As shown in FIG. 4, all of the rotary-side molds 14 and 14 partially overlap with the base portion 33. That is, at the time of mold clamping, a part of the rotary-side molds 14, 14 overlaps with the wear plate 30 (see FIG. 3). As a result, the mold clamping force appropriately acts on the rotary-side molds 14, 14.

In the present illustrative embodiment, both of the wear plate 30 and the base portion 33 have a flat contour shape, and because they are formed in such a shape, the rotary platen 4 can be rotated at a high speed. This will be explained step by step.

### <Overlapping Portion between Wear Plate and Base Portion>

In the illustrative embodiment of the present invention, a shape of an overlapping portion where the plate-form member and the base portion appear to overlap each other when projected from the direction perpendicular to the rotary platen may change according to the rotation position of the rotary platen, and
it is preferable that a maximum overlap radius is smaller when an angular speed of the rotary platen is the maximum than that when the angular speed is zero, the maximum overlap radius being a distance from the rotation center of the rotary platen to a position farthest from the rotation center of the overlapping portion.

Preferably, the shape of the overlapping portion is substantially the same as the contour shape of the plate-form member at the time of mold clamping.

When projected from the direction perpendicular to the rotary platen 4 (see FIG. 4), the wear plate 30 of the movable platen 7 (see FIG. 3) and the base portion 33 of the rotary platen 4 overlap each other, that is, the overlapping portion is formed. The shape of the overlapping portion changes according to the rotation position of the rotary platen 4. FIG. 7A shows an overlapping portion 40 of the wear plate 30 and the base portion 33 when the rotary platen 4 is at a first rotation position. The shape of the overlapping portion 40 is substantially the same as that of the wear plate 30 and the base portion 33. Therefore, as described above, at the time of mold clamping, the mold clamping force acts on the entire wear plate 30 and the base portion 33.

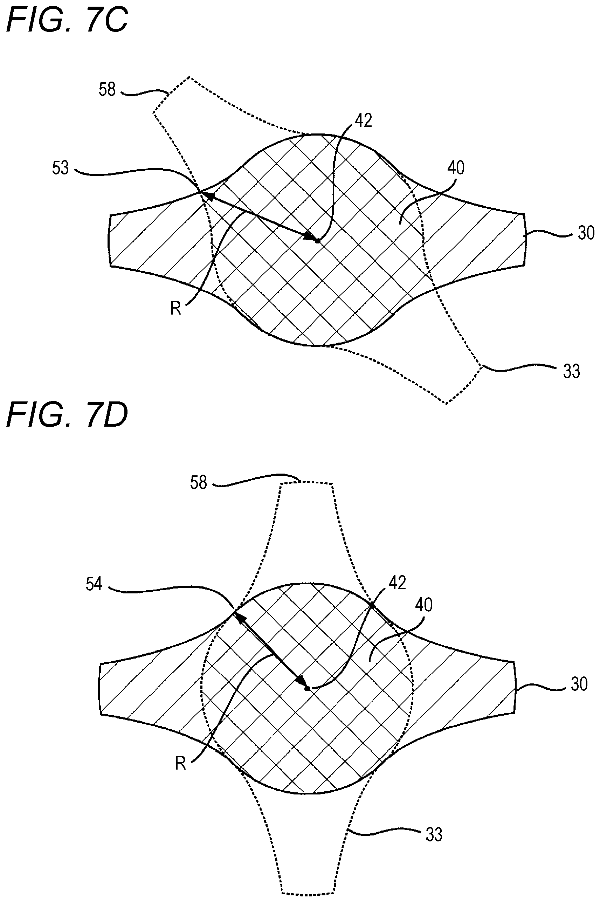

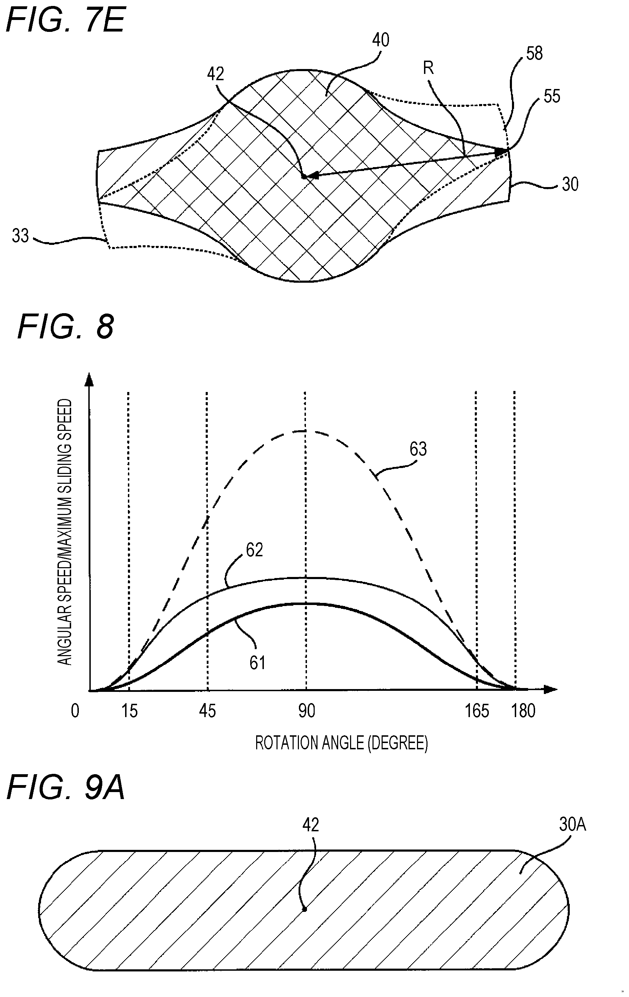

When rotating the rotary platen 4 (see FIG. 2) from the first rotation position, that is, a rotation position of 0 degree, to a second rotation position, that is, a rotation position of 180 degrees, changes in the overlapping portion 40 at each rotation position are considered. When the rotation of the rotary platen 4 is started and a rotation angle reaches 15 degrees, the overlapping portion 40 changes as shown in FIG. 7B. Next, when the rotation angle reaches 45 degrees, 90 degrees, and 165 degrees, the overlapping portion 40 changes as shown in FIG. 7C, FIG. 7D, and FIG. 7E, respectively.

As described above, in the injection molding machine 1 (see FIG. 1) according to the present illustrative embodiment, the wear plate 30 and the base portion 33 hardly come into contact with each other when the rotary platen 4 (see FIG. 2) rotates. However, at the time of designing the injection molding machine 1, it is assumed that the wear plate 30 and the base portion 33 will come into contact with each other and slide during the rotation. The wear plate 30 has a maximum value of allowed sliding speed, that is, an allowable sliding speed. In this case, it is necessary to design so as not to exceed the allowable sliding speed. When the wear plate 30 and the base portion 33 slide during the rotation, it is the overlapping portion 40 (see FIGS. 7A to 7E) that slides. The sliding speed differs depending on each portion of the overlapping portion 40, and is maximum at a portion farthest from the rotation center 42. This is because the sliding speed is given by the product of the angular speed of the rotation and a distance from the rotation center 42.

When the rotation angle is 0 degree, that is, when the rotary platen 4 (see FIG. 2) is at the first rotation position, as shown in FIG. 7A, the portion farthest from the rotation center 42 in the overlapping portion 40 is denoted by a reference numeral 51, and the sliding speed becomes the maximum at this portion. When the rotation position is 15 degrees, 45 degrees, 90 degrees, and 165 degrees, as shown in FIG. 7B to FIG. 7E, the sliding speed becomes the maximum at portions denoted by reference numerals 52, 53, 54, and 55, respectively.

The graph of FIG. 8 shows changes in an angular speed 61 of the rotary platen 4 and a maximum sliding speed 62 in the overlapping portion 40 when the rotary platen 4 (see FIG. 2) is rotated from the first rotation position to the second rotation position. Further, for reference, changes in a tip end speed 63 in a tip end portion 58 of the base portion 33 in FIGS. 7A to 7E are shown by the graph. The angular speed 61 of the rotary platen 4 is zero when the rotation angle is 0 degree, that is, at the first rotation position, and increases as the rotation angle increases from 15 degrees to 45 degrees. The angular speed 61 is maximum when the rotation angle is 90 degrees, then decreases, and becomes zero when the rotation angle reaches 180 degrees, that is, at the second rotation position. The tip end speed 63 (see FIG. 8) in the tip end portion 58 (see FIGS. 7A to 7E) of the base portion 33 changes similarly to the angular speed 61. That is, the tip end speed 63 is zero when the rotation angle is 0 degree, increases as the rotation angle increases, reaches the maximum when the rotation angle is 90 degrees, and then decreases to zero when the rotation angle is 180 degrees.

On the other hand, the maximum sliding speed 62 (see FIG. 8) changes as follows. First, the maximum sliding speed 62 is zero when the rotation angle is 0 degree, and increases similarly to the tip end speed 63 until the rotation angle reaches 15 degrees. However, when the rotation angle exceeds 15 degrees, the rate of increase in the maximum sliding speed 62 decreases. That is, the rate of increase is smaller than that of the tip end speed 63. When the rotation angle is 90 degrees, the maximum sliding speed 62 is maximum, but is only about 50% of the tip end speed 63. Thereafter, as the rotation angle increases, the maximum sliding speed 62 decreases and becomes zero when the rotation angle is 180 degrees.

The reason why the maximum sliding speed 62 is less likely to increase as described above is that the contour shapes of the wear plate 30 and the base portion 33 are flat. As can be understood from FIG. 7A to FIG. 7E and FIG. 8, this is because a maximum overlap radius R, which is the distance from the rotation center 42 to the farthest portion (reference numerals 51 to 55) in the overlapping portion 40, is smaller when the angular speed 61 is maximum than when the angular speed 61 is zero.

As described above, the wear plate 30 has a predetermined allowable sliding speed, and cannot be allowed to slide beyond the speed. In the injection molding machine 1 (see FIG. 1) according to the present illustrative embodiment, the maximum sliding speed 62 is less likely to increase. Thus, even if the rotary platen 4 is rotated at a high speed, the allowable sliding speed of the wear plate 30 is not exceeded. Therefore, the injection molding machine 1 according to the present illustrative embodiment can rotate the rotary platen 4 at a high speed.

### <Modifications of Wear Plate>

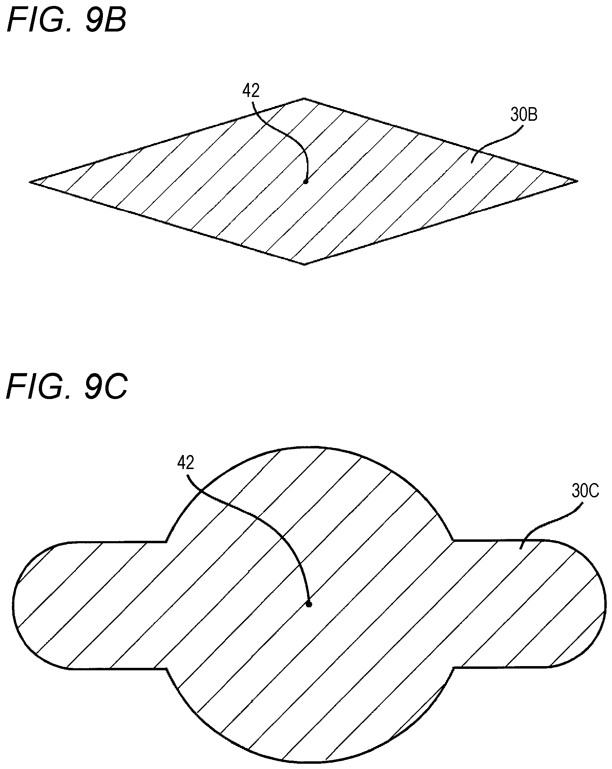

Various modifications are possible for the injection molding machine 1 according to the present illustrative embodiment. For example, the wear plate 30 (see FIG. 3) and the base portion 33 (see FIG. 4) may be deformed. FIGS. 9A to 9C show flat wear plates 30A to 30C, respectively. In each of the wear plates 30A to 30C, a distance from the rotation center 42 is longer in a left-right direction, and is shorter in an upper-lower direction. Therefore, when the base portion 33 is also formed into a flat shape like the wear plates 30A to 30C, the maximum sliding speed is less likely to increase, and the rotation speed of the rotary platen 4 (see FIG. 2) can be increased.

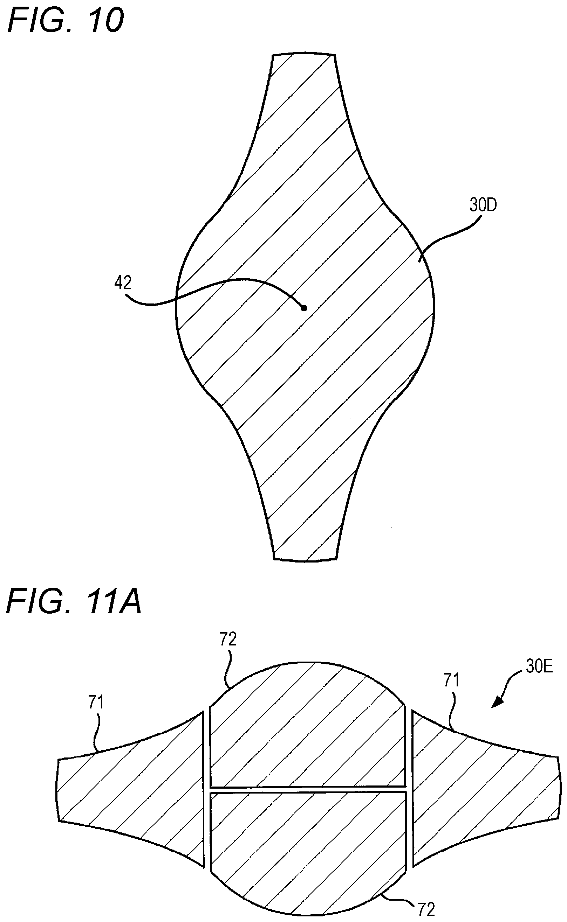

Each of the wear plates 30, 30A to 30C shown in FIGS. 3 and 9A to 9C has a shape elongated in a lateral direction. The reason for the flat shape elongated in the lateral direction as described above is that the rotary-side molds 14, 14 are arranged horizontally as shown in FIG. 4, and this allows the mold clamping force to act on the rotary-side molds 14, 14 during mold clamping. On the other hand, in a case where the rotary-side molds 14, 14 are arranged vertically, the wear plate 30D may be formed to be long in a vertical direction as shown in FIG. 10. As a result, the mold clamping force reliably acts on the rotary-side molds 14, 14.

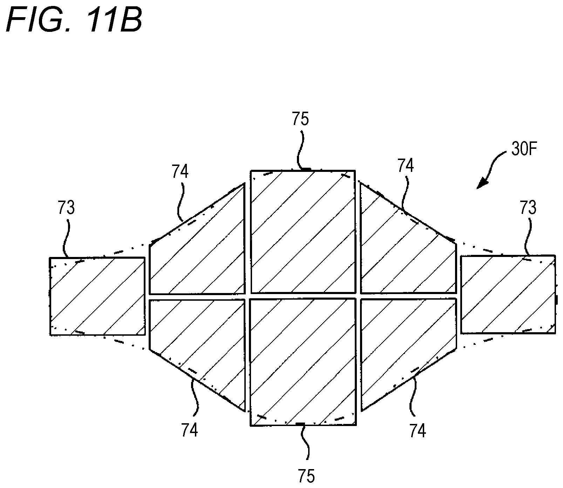

As shown in FIGS. 11A and 11B, the plate-form member, that is, wear plates 30E and 30F may include a plurality of divided piece plates 71, 72, ..., and 75. When the wear plate includes the plurality of piece plates 71, 72, ..., and 75, if the contour shape of the wear plates 30E, 30F is also non-circular as a whole, the rotation speed of the rotary platen 4 (see FIG. 2) can be increased.

### <Other Modifications>

In the present illustrative embodiment, the wear plate 30 (see FIG. 3) is provided on the movable platen 7, and the base portion 33 (see FIG. 4) is formed on the rotary platen 4. However, the wear plate 30 may be provided on the rotary platen 4, and the base portion 33 may be formed on the movable platen 7.

As described above, the rotary platen according to an illustrative embodiment of present invention is a rotary platen that is disposed to face a mold platen, is provided to be rotatable with respect to the mold platen, and is configured such that a mold is attached thereto,
in which a plate-form member is attached to a surface of the rotary platen that faces the mold platen, and
in which a contour shape of the plate-form member is non-circular, which corresponds to the above modification.

In this case, the plate-form member is preferably formed of a material having a hardness lower than that of the mold platen.

The plate-form member is preferably made of a metal plate with a solid lubricant.

In the present illustrative embodiment, it has been described that the wear plate 30 and the base portion 33 hardly come into contact with each other during the rotation of the rotary platen 4 (see FIG. 2), and therefore, hardly slide. However, the wear plate 30 and the base portion 33 may slide during the rotation.

Although the invention made by the present inventors is specifically described based on the illustrative embodiment, it is needless to say that the present invention is not limited to the illustrative embodiment described above, and various modifications can be made without departing from the scope of the invention. The plurality of examples described above may be appropriately combined.

### INDUSTRIAL APPLICABILITY

According to the present disclosure, it is possible to provide a rotary platen that can be rotated at a high speed, a mold clamping device including the rotary platen, and an injection molding machine.

Although the present invention has been described in detail with reference to a specific illustrative embodiment, it will be apparent to those skilled in the art that various changes and modifications can be made without departing from the scope of the present invention as defined in the appended claims.

### REFERENCE SIGNS LIST

- 331: Injection molding machine
- 2: Mold clamping device
- 3: Injection device
- 4: Rotary platen
- 5: Fixed platen
- 6: Mold clamping housing
- 7: Movable platen
- 9: Tie bar
- 11: Mold clamping mechanism
- 13: Fixed-side mold
- 14: Rotary-side mold
- 16: Heating cylinder
- 17: Screw
- 18: Screw driving device
- 20: Hopper
- 22: Injection nozzle
- 24: Pulley
- 25: Rotary platen driving mechanism
- 26: Belt
- 28: Circular table portion
- 30, 30A, 30B, 30C, 30D, 30E, and 30F: Wear plate
- 31: Ejector rod hole
- 33: Base portion
- 34: Ejector rod hole
- 36: Cross roller ring
- 36a: Outer ring
- 36b: Inner ring
- 36c: Roller
- 38: Pressing member
- 40: Overlapping portion
- 42: Rotation center
- 51, 52, 53, 54, and 55: Portion farthest from rotation center
- 58: Tip end portion
- 61: Angular speed
- 62: Maximum sliding speed
- 63: Tip end speed
- 71, 72, 73, 74, and 75: Piece plate
- B: Bed
- R: Maximum overlap radius

## Claims

1. A mold clamping device (2) comprising:
a fixed platen (5), a first mold (13) being attachable to the fixed platen (5);
a movable platen (7) configured to open and close molds (13, 14) with respect to the fixed platen (5); and
a rotary platen (4) disposed to face the movable platen (7), the rotary platen (4) being provided to be rotatable with respect to the movable platen (7), and a second mold (14) being attachable to the rotary platen (4),
wherein a plate-form member (30) is provided on a surface of one platen of the movable platen (7) and the rotary platen (4) that faces the other platen, and
wherein a contour shape of the plate-form member (30) is non-circular, **characterized in that**
a base portion (33) is formed on a surface of the other platen that faces the one platen,
wherein an upper surface of the base portion (33) serves as a pressure receiving surface that is configured to come into close contact with the plate-form member (30) and receive a mold clamping force during mold clamping, and
wherein a contour shape of the base portion (33) is non-circular.

2. The mold clamping device (2) according to claim 1,
wherein a shape of an overlapping portion (40) where the plate-form member (30) and the base portion (33) appear to overlap each other when projected from a direction perpendicular to the rotary platen (4) changes according to a rotation position of the rotary platen (4), and
wherein a maximum overlap radius (R) is smaller when an angular speed (61) of the rotary platen (4) is maximum than that when the angular speed (61) is zero, the maximum overlap radius (R) being a distance from a rotation center (42) of the rotary platen (4) to a position farthest from the rotation center of the overlapping portion (40).

3. The mold clamping device (2) according to claim 2, wherein a shape of the overlapping portion is substantially the same as the contour shape of the plate-form member (30) during mold clamping.

4. The mold clamping device (2) according to any one of claims 1 to 3, wherein a plurality of second molds (14) attached to the rotary platen (4) each are at least partially overlapped with the plate-form member (30) when viewed from a direction perpendicular to the rotary platen (4).

5. The mold clamping device (2) according to any one of the preceding claims, wherein the plate-form member (30) is formed of a material having a hardness lower than that of the base portion (33).

6. The mold clamping device (2) according to any one of the preceding claims, wherein the plate-form member (30) is made of a metal plate with a solid lubricant.

7. An injection molding machine (1) comprising:
a mold clamping device (2) according to any one of the preceding claims configured to clamp a mold; and
an injection device (3) configured to inject an injection material.

## Patentansprüche

1. Eine Formschließvorrichtung (2), aufweisend:
eine feste Platte (5), wobei eine erste Form (13) an der festen Platte (5) angebracht werden kann;
eine bewegliche Platte (7), die zum Öffnen und Schließen von Formen (13, 14) in Bezug auf die feste Platte (5) konfiguriert ist; und
eine drehbare Platte (4), die so angeordnet ist, dass sie der beweglichen Platte (7) gegenüberliegt, wobei die drehbare Platte (4) so vorgesehen ist, dass sie in Bezug auf die bewegliche Platte (7) drehbar ist, und eine zweite Form (14) an der drehbaren Platte (4) angebracht werden kann,
wobei ein plattenförmiges Element (30) auf einer Oberfläche einer Platte der beweglichen Platte (7) und der drehbaren Platte (4) vorgesehen ist, die der anderen Platte gegenüberliegt, und
wobei eine Konturform des plattenbildenden Elements (30) nicht kreisförmig ist, **dadurch gekennzeichnet, dass**
ein Basisabschnitt (33) auf einer Oberfläche der anderen Platte ausgebildet ist, die der einen Platte zugewandt ist,
wobei eine obere Fläche des Basisabschnitts (33) als eine Druckaufnahmefläche dient, die so konfiguriert ist, dass sie in engen Kontakt mit dem plattenförmigen Element (30) kommt und eine Formschließkraft während des Formschließens aufnimmt, und
wobei eine Konturform des Basisabschnitts (33) nicht kreisförmig ist.

2. Die Formschließvorrichtung (2) nach Anspruch 1,
wobei sich die Form eines Überlappungsabschnitts (40), in dem das Plattenformelement (30) und der Basisabschnitt (33) einander zu überlappen scheinen, wenn sie aus einer Richtung senkrecht zur drehbaren Platte (4) projiziert werden, in Abhängigkeit von einer Drehposition der drehbaren Platte (4) ändert, und
wobei ein maximaler Überlappungsradius (R) kleiner ist, wenn eine Winkelgeschwindigkeit (61) der drehbaren Platte (4) maximal ist, als derjenige, wenn die Winkelgeschwindigkeit (61) null ist, wobei der maximale Überlappungsradius (R) ein Abstand von einem Rotationszentrum (42) der drehbaren Platte (4) zu einer Position ist, die am weitesten von dem Rotationszentrum des überlappenden Abschnitts (40) entfernt ist.

3. Die Formschließvorrichtung (2) nach Anspruch 2, wobei eine Form des überlappenden Abschnitts im Wesentlichen die gleiche ist wie die Konturform des plattenförmigen Elements (30) während des Formschließens.

4. Die Formschließvorrichtung (2) nach einem der Ansprüche 1 bis 3, wobei eine Vielzahl von zweiten Formen (14), die an der drehbaren Platte (4) befestigt sind, jeweils aus einer Richtung senkrecht zur drehbaren Platte (4) gesehen zumindest teilweise mit dem plattenförmigen Element (30) überlappt werden.

5. Die Formschließvorrichtung (2) nach einem der vorhergehenden Ansprüche, wobei das Plattenformelement (30) aus einem Material mit einer geringeren Härte als der des Basisabschnitts (33) gebildet ist.

6. Die Formschließvorrichtung (2) nach einem der vorhergehenden Ansprüche, wobei das plattenförmige Element (30) aus einer Metallplatte mit einem Festschmierstoff hergestellt ist.

7. Eine Spritzgießmaschine (1) aufweisend:
eine Formschließvorrichtung (2) nach einem der vorangehenden Ansprüche, die so konfiguriert ist, dass sie eine Form einspannt; und
eine Einspritzvorrichtung (3), die zum Einspritzen eines Einspritzmaterials ausgebildet ist.

## Revendications

1. Dispositif de serrage de moule (2) comprenant :
un plateau fixe (5), un premier moule (13) pouvant être fixé au plateau fixe (5) ;
un plateau mobile (7) configuré pour ouvrir et fermer des moules (13, 14) par rapport au plateau fixe (5) ; et
un plateau rotatif (4) disposé pour faire face au plateau mobile (7), le plateau rotatif (4) étant prévu pour pouvoir tourner par rapport au plateau mobile (7), et un second moule (14) pouvant être fixé au plateau rotatif (4),
dans lequel un élément en forme de plaque (30) est prévu sur une surface d'un premier plateau du plateau mobile (7) et du plateau rotatif (4) qui fait face à l'autre plateau, et
dans lequel une forme de contour de l'élément en forme de plaque (30) n'est pas circulaire, **caractérisé en ce que**
une partie de base (33) est formée sur une surface de l'autre plateau qui fait face au premier plateau,
dans lequel une surface supérieure de la partie de base (33) sert de surface de réception de pression qui est configurée pour venir en contact étroit avec l'élément en forme de plaque (30) et recevoir une force de serrage de moule pendant le serrage de moule, et
dans lequel une forme de contour de la partie de base (33) n'est pas circulaire.

2. Dispositif de serrage de moule (2) selon la revendication 1,
dans lequel une forme d'une partie de recouvrement (40) où l'élément en forme de plaque (30) et la partie de base (33) semblent se recouvrir l'un l'autre lorsqu'ils sont projetés à partir d'une direction perpendiculaire au plateau rotatif (4) change en fonction d'une position de rotation du plateau rotatif (4), et
dans lequel un rayon de recouvrement maximal (R) est plus petit lorsque la vitesse angulaire (61) du plateau rotatif (4) est maximale que lorsque la vitesse angulaire (61) est nulle, le rayon de recouvrement maximal (R) étant une distance entre un centre de rotation (42) du plateau rotatif (4) et la position la plus éloignée du centre de rotation de la partie de recouvrement (40).

3. Dispositif de serrage de moule (2) selon la revendication 2, dans lequel une forme de la partie de recouvrement est sensiblement la même que la forme de contour de l'élément en forme de plaque (30) pendant le serrage de moule.

4. Dispositif de serrage de moule (2) selon l'une quelconque des revendications 1 à 3, dans lequel une pluralité de seconds moules (14) fixés au plateau rotatif (4) sont chacun au moins partiellement recouverts par l'élément en forme de plaque (30) lorsqu'on regarde depuis une direction perpendiculaire au plateau rotatif (4).

5. Dispositif de serrage de moule (2) selon l'une quelconque des revendications précédentes, dans lequel l'élément en forme de plaque (30) est formé d'un matériau ayant une dureté inférieure à celle de la partie de base (33).

6. Dispositif de serrage de moule (2) selon l'une quelconque des revendications précédentes, dans lequel l'élément en forme de plaque (30) est constitué d'une plaque métallique avec un lubrifiant solide.

7. Machine de moulage par injection (1) comprenant :
un dispositif de serrage de moule (2) selon l'une quelconque des revendications précédentes configuré pour serrer un moule ; et
un dispositif d'injection (3) configuré pour injecter un matériau d'injection.
